# EUROPÄISCHE PATENTANMELDUNG

(11) **EP 3 211 774 A1**
(43) Veröffentlichungstag der Anmeldung: **30.08.2017**
(21) Anmeldenummer: 16157649.1
(22) Anmeldetag: 26.02.2016
(51) Int. Cl.: H02K 21/04, H02K 1/22

(54) **PERMANENTERREGTE SYNCHRONMASCHINE MIT SPULEN IM LÄUFER**

(71) Anmelder: Siemens Aktiengesellschaft, 80333 München (DE)
(72) Erfinder: Braun, Jochen, 94032 Passau (DE)

(57) **Zusammenfassung**

Die Erfindung betrifft eine permanenterregte Synchronmaschinen (1) mit einem Stator (2) und einem Läufer (3), wobei der Läufer (3) Permanentmagnete (4) aufweist, wobei der Läufer (3) Spulen (5) aufweist, wobei ein Verhältnis von äquivalenter Luftspaltweite (6) zur Polteilung einen Wert von 1/12 überschreitet. Eine permanenterregte Synchronmaschine (1) mit Spulen (7) im Läufer kann einer Windkraftanlage (18) oder in einem Wasserfahrzeug (21) verwendet werden.

## Beschreibung

Die Erfindung betrifft eine permanenterregte Synchronmaschine mit Spulen im Läufer und deren Verwendung.

Permanenterregte Synchronmaschinen werden mit Permanentmagneten über den Läufer magnetisch erregt. Diese Magnete sind beispielsweise Seltene-Erd-Magnete wie z.B. Neodym-Eisen-Bor-Magnete (NdFeB) die je nach Güte unterschiedliche magnetische Eigenschaften haben. Diese Eigenschaften werden vom Hersteller durch unterschiedliche Materialzusammenstellungen erzielt. Zwei charakteristische Eigenschaften sind die Remanenz-Induktion und die Koerzitivfeldstärke. Diese zwei Größen der unterschiedlichen Magnetgüten verändern sich mit der Betriebstemperatur. Bei NdFeB-Magneten reduzieren sich sowohl die Remanenz als auch die Koerzitivfeldstärke mit steigender Temperatur. Die Koerzitivfeldstärke stellt die absolute Entmagnetisierungsgrenze für den Magneten dar.

Aus der WO 2014/092957 A2 ist eine permanenterregte Synchronmaschine mit Spulen im Läufer bekannt.

Eine Aufgabe der vorliegenden Erfindung ist es eine robuste permanenterregte Synchronmaschine anzugeben. Eine robuste permanenterregte Synchronmaschine kann in herausfordernden Anwendungsgebieten eingesetzt werden.

Eine Lösung der Aufgabe gelingt bei einer permanenterregten Synchronmaschine nach Anspruch 1 und bei einer Verwendung einer permanenterregten Synchronmaschine nach Anspruch 12. Ausgestaltungen der permanenterregten Synchronmaschine bzw. der Verwendung ergeben sich nach den Ansprüchen 2 bis 11 bzw. nach den Ansprüchen 13 bis 16.

Es wurde erkannt, dass auch bei kleineren magnetischen Feldstärken als die Koerzitivfeldstärke bereits eine Teilentmagnetisierung eintritt. Diesen negativen Effekt gilt es zu reduzieren. Die Entmagnetisierung bei permanentmagneterregten Synchronmaschine ist für alle zulässigen Betriebstemperaturen und Betriebspunkte aber auch für Fehlerfälle oder für unzulässige Betriebszustände auszuschließen oder zu reduzieren. Dies ist vorteilhaft, da sich die Maschineneigenschaften mit der Entmagnetisierung von Magneten verändern, bzw. schlechter sind. Der Ständerklemmenstoßkurzschluss stellt beispielsweise einen schweren Fehlerfall dar. Es sind ein-, oder mehrphasige Klemmenkurzschlüsse möglich. Auch diese Fälle sollen die Permanentmagnete (insbesondere alle Permanentmagnete) einer permanentmagneterregten Synchronmaschine ohne Entmagnetisierung bei der maximal zugelassenen Magnettemperatur überstehen, bzw. diese möglichst klein gehalten werden. Eine permanenterregte Synchronmaschine ist deshalb vorteilhaft kurzschlussfest ausgelegt.

Bei der elektromagnetischen Auslegung wird der magnetische Kreis beispielsweise auch für den Stoßkurzschluss als möglicher Fehlerfall ausgelegt. Hierfür werden insbesondere Magneten mit höherer magnetischer Koerzitivfeldstärke (z.B. N45SH statt N45M) verwendet, als wenn die Auslegung nur für den fehlerfreien Betrieb ausgelegt werden würde oder mehr Magnetmaterial. Diesem Magnetmaterial wird üblicherweise eine höhere Menge an Dysprosium vom Hersteller beigefügt. Dysprosium ist allerdings ein teures Material, das den Magnetpreis und damit den Maschinenpreis deutlich in die Höhe treibt.

Um die Robustheit der permanenterregten Synchronmaschine zu erhöhen sind im rotierenden Läufer dieser permanenterregten elektrischen Maschine elektrisch leitfähige Spulen zusätzlich zu Permanentmagneten untergebracht. Es gibt insbesondere so viele einzelnen Läuferspulen wie magnetische Pole. Das Prinzip kann bei Innen und bei Außenläufern angewendet werden.

Damit kann einer Entmagnetisierung der Permanentmagnete, insbesondere im Fehlerfall, entgegengewirkt werden. Damit kann es auch ermöglicht werden preisgünstigere Permanentmagnete mit weniger Dysprosium bzw. weniger eines anderen Seltenerdmetalls einzusetzen.

In einer Ausgestaltung einer permanenterregten Synchronmaschine weist diese Permanentmagnete auf, welche einen geringen Dysprosium Anteil (Dy) aufweisen. Der Dysprosium Anteil ist gering, wenn er kleiner 2% ist. Derartige Permanentmagnete können auch als dysprosiumarm bezeichnet werden. Permanentmagnete können auch einen Dy-Anteil von 0% haben.

Eine permanenterregte Synchronmaschine mit Spulen im Läufer wird beispielsweise dort eingesetzt, wo eine hohe Verfügbarkeit und/oder eine hohe Leistung vorzusehen sind. Dies insbesondere in Verbindung mit einer hohen Fehlertoleranz. Wichtig ist dies insbesondere bei Verwendungen, wo die Zugänglichkeit zur permanenterregten Synchronmaschine erschwert ist. Beispiele hierfür sind Wasserfahrzeuge oder Windkraftanlagen, welche sich insbesondere auf See befinden (offshore). Ein Wasserfahrzeug ist beispielsweise ein Schiff oder ein U-Boot. Ein Schiff ist beispielsweise ein Containerschiff, ein Flugzeugträger, eine Fregatte, ein Zerstörer, ein Eisbrecher, Patrouillenboot, ein Frachter oder eine Fähre. Bei einer Windkraftanlage befindet sich die permanenterregte Synchronmaschine insbesondere auf einem Turm. Auf dem Turm ist die Gondel montiert. In der Gondel befindet sich die permanenterregte Synchronmaschine. Dabei kann es sich beispielsweise auch um einen Direktantrieb ohne Getriebe handeln, wobei sich dann die permanenterregte Synchronmaschine im Bereich der Nabe, welche ein Teil der Gondel ist, befindet.

Bei einer Verwendung einer permanenterregten Synchronmaschine in einer Gondel einer Windkraftanlage oder in einem Wasserfahrzeug, wird also eine permanenterregte Synchronmaschine mit einem Stator und einem Läufer verwendet, wobei der Läufer Permanentmagnete und Spulen aufweist, wobei die Spulen den magnetischen Fluss der Permanentmagnete umfassen. Die Spulen können oberhalb der Permanentmagnete, neben den Permanentmagneten und/oder unterhalb der Permanentmagnete angeordnet sein. Die Positionierung orientiert sich dabei an einer radialen Richtung von der Drehachse des Läufers weg. Die jeweilige Spule umfasst dabei insbesondere den Hauptfluss eines Pols, der durch einen Permanentmagneten oder einer Vielzahl von Permanentmagneten ausgebildet ist. Der Läufer der permanenterregten Synchronmaschine weist eine Vielzahl von Spulen auf, wobei jeweils eine Spule den magnetischen Hauptfluss eines Pols des Läufers umfasst. Der Hauptfluss ist zumindest 50% des magnetischen Gesamtflusses des durch Permanentmagnete gebildeten Pols.

Sie Spulen im Läufer der permanenterregten Synchronmaschine erhöhen deren Robustheit was diese insbesondere also auch für den Einsatz in einem Wasserfahrzeug, wie einem Unterseeboot, einem Marineschiff oder z.B. einem Containerschiff ertüchtigt.

Die Weite der Spulen ist beispielsweise so groß, dass der oder die Magnete eines Pols komplett bzw. nahezu umschlossen sind. Die Spule eines magnetischen Pols erstreckt sich insbesondere in axialer Richtung über die komplette Maschinenlänge und umschließt damit auch axial alle Magnete eines magnetischen Pols, wobei die Spule an beiden Maschinenseiten kurzgeschlossen ist. Die Spule kann je nach Anwendung beispielsweise aus Kupfer oder Aluminiumleitern gefertigt sein. Der Leiter kann wiederum, je nach Anwendung, massiv oder aus Einzeldrähten (Litzen) hergestellt sein. Die Litzen können auch nach Bedarf zur Vermeidung von Wirbelstromeffekten z.B. Lackisoliert werden, um die Wirkung der Spulen zu optimieren. Die Spule wird z.B. mit nur einer Windung ausgeführt. Mehr Windungen, also eine Vielzahl von Windungen, können zur Anpassung von Spannung und Strom verwendet werden. Die Läuferspule kann bei Läufern, mit auf der Oberfläche angebrachten Magneten, unterhalb der Magneten platziert werden. Es ist auch möglich die Spulen im Luftspalt unterzubringen. Hierfür kann der Platz zwischen den Magnetpolen verwendet werden. Bei Läufern mit vergrabenen Magneten kann die Spule auch oberhalb der Magnete platziert werden. Unabhängig davon wie der Läufer der permanentmagneterregten Synchronmaschine ohne Läuferspule gestaltet ist kann die Spule oberhalb, unterhalb oder um die Magnete herum platziert werden. Bei der Position der jeweiligen Spule des Läufers ist es vorteilhaft den umfassten magnetischen Fluss zu maximieren. Es ist also vorteilhaft, wenn die Spule maximal mit dem Hauptfluss, der durch die Magnete eines Pols erzeugt wird, verkettet ist.

Durch die zusätzlichen Spulen im permanentmagneterregten Läufer ist es beispielsweise möglich die Belastung des jeweiligen Permanentmagneten beim Stoßkurzschluss oder einem anderen Fehlerfall, die beim Magneten über die stationäre Betriebsbelastung (Magnetarbeitspunkt) gehen, zu reduzieren und zwar bei der gleichen Temperatur. Damit kann günstigeres Magnetmaterial verwendet werden und es sind effektive Einsparungen möglich.

Beim dreiphasigen Stoßkurzschluss in der Ständerwicklung setzt sich der resultierende Fluss ψ_{Res} aus dem Magnetfluss ψ_{PM} und dem Spulenfluss ψ_{Spule} zusammen (ψ_{Res} = ψ_{PM} + ψ_{Spule}). Der Spulenfluss entlastet die Magnete und kann diese vor Entmagnetisierung schützen.

Bei Windkraftanlagen ist beispielsweise eine dauerhafte Leistungsminderung durch Entmagnetisierung der Magnete bei Kurzschlüssen an den Ständerklemmen zu vermeiden. Die Spulenanordnung im Läufer ist in der Lage die Entmagnetisierung zu verhindern bzw. zu reduzieren. Läufer können Innen- und Außenläufer sein, wobei dies nicht auf Windkraftanlagen beschränkt ist.

Durch die Veränderung des Betriebs der Maschine (der permanenterregten Synchronmaschine, z.B. durch einen Stoßkurzschluss, verändert sich der Hauptfluss, der durch die Magnete erzeugt wird (Arbeitspunktänderung des Magneten (Permanentmagneten) wegen höherer Ständerdurchflutung). Diese Änderung induzierte eine Spannung in den Spulen des Läufers (Läuferspulen) nach dem Induktionsgesetz. Da diese Spulen jeweils kurzgeschlossen sind, wird ein Strom fließen, welcher der Flussänderung durch Spule und Magnet entgegenwirkt. Die Überlagerung von Magnetfluss im Stoßkurzschluss und dem Fluss, der durch die kurzgeschlossene Spule während diesem transienten Vorgang entsteht, ist größer, als wenn keine kurzgeschlossene Läuferspule vorhanden wäre. Der größer bleibende Gesamtfluss bildet gleichzeitig die geringere Belastung der Permanentmagneten ab, da der Betriebspunkt der Magneten weniger weit auf der Entmagnetisierungskurve in Richtung Knick der J-H-Kurve während der Belastung verschoben wird (die magnetische Feldstärke im Magneten ist weniger stark negativ). Die Entmagnetisierungskurve betrifft insbesondere die Magnetisierungskurve im zweiten Quadraten eines hartmagnetischen Werkstoffes.

Mit der Reduzierung der Belastung des Magneten insbesondere im Fehlerfall ist es z.B. möglich, die Menge des Dysprosiumanteils im verwendeten Magneten zu reduzieren. Mit der geringeren Güte der Magnete reduziert sich der Magnetpreis deutlich. Eventuell können je nach Anwendungstemperatur dysprosiumfreie Magnete verwendet werden. Auch kann beispielsweise weniger Magnetmaterial verwendet werden, wenn dies die elektromagnetische Auslegung zulässt. Es kann somit am Magnetmaterial gespart werden, durch den Einsatz von elektrisch leitfähigem Material im Rotor.

Mit den kurzgeschlossenen Spulen im Läufer erhält man auch die Möglichkeit die Subtransiente Reaktanz einer permanentmagneterregten Synchronmaschine zu beeinflussen. Dies ist ohne die Spulen nicht ausreichend möglich. Damit kann das Einsatzgebiet der permanentmagneterregten Synchronmaschine erweitert werden. Auch kann eine Reduzierung der Gesamtverluste im Umrichterbetrieb (z.B. bei Blocktacktung) erreicht werden.

In einer Ausgestaltung der permanenterregten Synchronmaschinen weist diese einen Stator und einen Läufer auf, wobei der Läufer Permanentmagnete und Spulen aufweist, wobei ein Verhältnis von äquivalenter Luftspaltweite zur Polteilung einen Wert von 1/10 überschreitet. Ist das Verhältnis größer 1/10 ergibt sich ein Schutz des/der gesamten Magneten. Bei einer Unterschreitung des Verhältnisses, also bei Werten von z.B. 1/15 oder 1/20, ist es möglich, dass nur die Randgebiete des/der Magneten geschützt werden. Um das Verhältnis zu erreichen ist eine hohe Polpaarzahl zu verwenden. Die Polpaarzahl geht in die Herstellkosten ein, da mehr Ständerspulen gefertigt werden müssen.

Bei einem sehr großem Verhältnis von äquivalenter Luftspaltweite zu Polteilung kann man an Fertigungsgrenzen gelangen, da die Geometrien in den Ständerspulen kleiner bzw. "feiner" werden. Auch die Magnetpole werden kleiner. Die Obergrenze wird aber mit größer werdender Maschine ebenfalls größer, da der Luftspalt größer gewählt wird. Ein sehr großes Verhältnis ist ein Verhältnis von 1/1.

In einer Ausgestaltung der permanenterregten Synchronmaschinen weist diese eine Leistung von mehr als 1 MW auf (insbesondere 1 MW bis 10 MW). Maschinen dieser Leistung kommen beispielsweise häufig in Windkraftanlagen bzw. als Antrieb in Schiffen zum Einsatz. Typische Leistungen von derartigen Maschinen sind zwischen 1 MW und 25 MW. Das Drehmoment kann dabei beispielsweise größer 120 kNm sein.

In einer Ausgestaltung der permanenterregten Synchronmaschinen weisen Spulen Litzen auf. Litzen sind flexibel und können einfach verlegt werden. Litzen haben auch den Vorteil, dass diese Stromverdrängungsarm sind, insbesondere bei Frequenzen größer 50 Hz und Umrichterbetrieb.

In einer Ausgestaltung der permanenterregten Synchronmaschinen sind die Spulen zum Kurzschluss verlötet oder gecrimpt (Verbindung durch plastische Verformung beider Enden). Durch das Verlöten oder Crimpen lässt sich eine rüttelfeste Verbindung herstellen.

In einer Ausgestaltung der permanenterregten Synchronmaschinen weist diese eine elektrische Grundfrequenz größer gleich 50 Hz auf. Die Maschine ist also für diese Grundfrequenz ausgelegt bzw. wird mit dieser betrieben. Bei Frequenzen größer 50 Hz kann es zu einer Stromverdrängung kommen (Skineffekt), was den Spulenwiderstand und die Verluste erhöht. Litzen wirken dem entgegen. In einer Ausgestaltung der permanenterregten Synchronmaschine weist diese Litzen auf, wenn die Grundfrequenz größer 50 Hz sein soll. Durch die Verwendung der Litzen können Frequenzen von 200 Hz oder sogar 400 Hz erreicht werden. Die Reaktanz der Spule ist frequenzabhängig. Die Wirksamkeit der Spule hängt vom Verhältnis von der Reaktanz zum Widerstand der Spule ab (Phasenlage des Stroms). Bei niedrigen Frequenzen dominiert der ohmsche Widerstandsanteil, da die Reaktanz mit der Frequenz abnimmt. Als Folge wird der schützende Fluss der Spule "zu früh" aufgebaut. Das Strommaximum tritt zum falschen Zeitpunkt auf (Phasenlage des Stroms). Bei hohen Frequenzen dominiert die Reaktanz, vorausgesetzt der Widerstand der Spule steigt nicht mit der Frequenz an. Deshalb ist eine Spule aus einzelnen Drähten (Litzen) vorteilhaft.

In einer Ausgestaltung der permanenterregten Synchronmaschinen sind die Spulen vergossen. Dies erhöht die Robustheit des Läufers, da im Kurzschlussfall hohe Kräfte auf die Spulen einwirken können. In einer Ausgestaltung der permanenterregten Synchronmaschinen sind auch die Permanentmagnete vergossen.

In einer Ausgestaltung der permanenterregten Synchronmaschinen sind die Spulen in Kanälen in einem Läuferblechpaket des Läufers. Dies erleichtert beispielsweise die Positionierung der Spulen.

In einer Ausgestaltung der permanenterregten Synchronmaschinen sind die Kanäle für die Spulen geschlitzt. Durch einen Streuschlitz kann die magnetische Streuung reduziert werden.

Die magnetische Streuung kann auch als Nutstreuung der Spule im Eisen bezeichnet werden.

In einer Ausgestaltung der permanenterregten Synchronmaschine sind die Spulen auf einem Läuferblechpaket des Läufers. Dies reduziert beispielsweise die Komplexität der gestanzten Bleche des Läufers.

In einer Ausgestaltung der permanenterregten Synchronmaschinen haben die Permanentmagnete einen geringen Dysprosiumanteil bzw. sind frei von Dysprosium. Daraus folgt eine geringere Koerzitivfeldstärke. Dies kann durch die Läuferspulen kompensiert werden.

Die Erfindung wird nachfolgend exemplarisch und schematisch an Hand von Figuren beispielhaft beschrieben. Dabei zeigt:
- FIG 1: eine erste perspektivische Darstellung eines Läufers einer permanenterregten Synchronmaschine;
- FIG 2: eine stirnseitige Darstellung des Läufers;
- FIG 3: eine zweite perspektivische Darstellung des Läufers;
- FIG 4: einen Ausschnitt eines Schnitts durch den Läufer in einer radialen Richtung;
- FIG 5: einen Schnitt durch den Läufer in einer perspektivischen Darstellung;
- FIG 6: einen weiteren Schnitt durch den Läufer;
- FIG 7: einen Ausschnitt eines Schnitts durch den Läufer in einer axialen Richtung;
- FIG 8: eine Litze als Spule
- FIG 9: einen Ausschnitt eines Schnitts durch den Läufer in einer perspektivischen Darstellung;
- FIG 10: einen Kreissegmentausschnitt einer permanenterregten Synchronmaschine;
- FIG 11: eine Spule tangential neben einem Pol;
- FIG 12: eine Spule in einem Kanal;
- FIG 13: eine Verguss von Spule und Pol;
- FIG 14: eine Windkraftanlage;
- FIG 15: ein Schiff; und
- FIG 16: ein Unterseeboot.

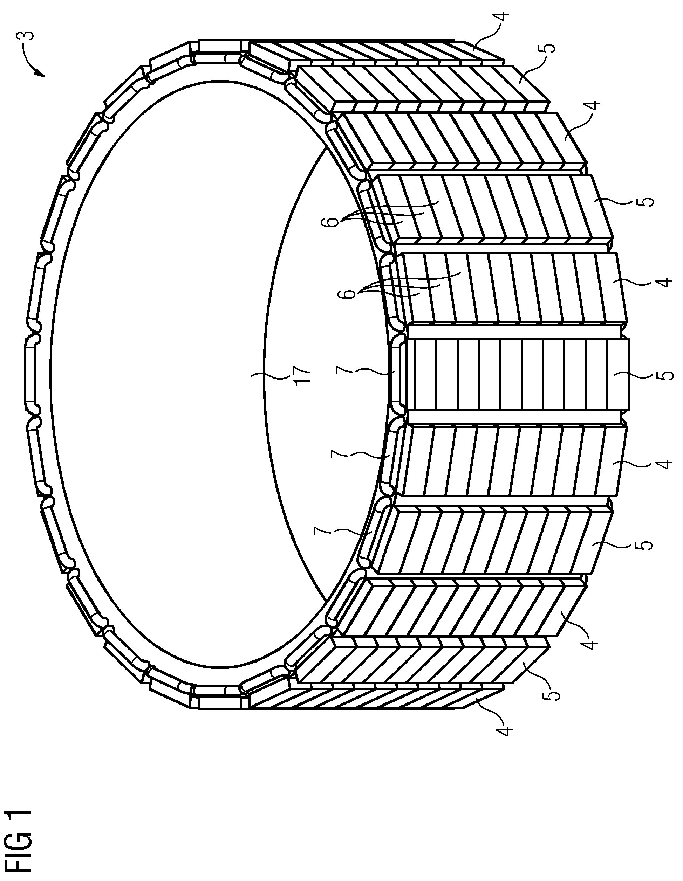

Die Darstellung nach FIG 1 zeigt eine erste perspektivische Darstellung eines Läufers 3 einer permanenterregten Synchronmaschine. Der Läufer 3 weist Pole 4, 5 auf. Die Pole 4, 5 werden durch eine Vielzahl von Permanentmagnete 6 gebildet. Die Permanentmagnete 6 befinden sich auf einem Läuferblechpaket 17. Der magnetische Hauptfluss der Permanentmagnete 6 eines Pols 4, 5 wird durch Spulen 7 umschlossen. Die Spulen 7 befinden sich im Blechpaket 17.

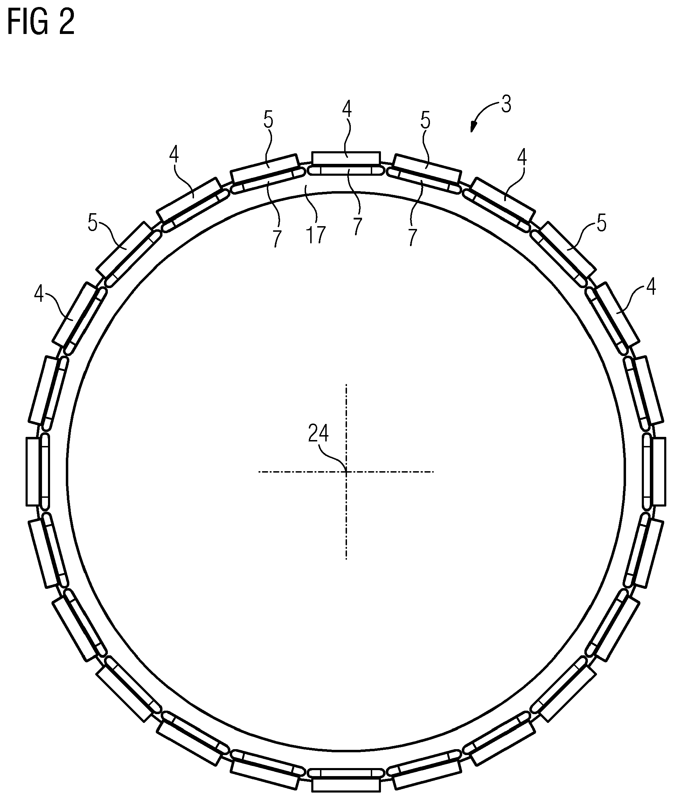

Die Darstellung nach FIG 2 zeigt eine stirnseitige Darstellung des Läufers 3 mit einer Läuferachse 24, den Polen 4, 5 und den Spulen 7 im Läuferblechpaket 17.

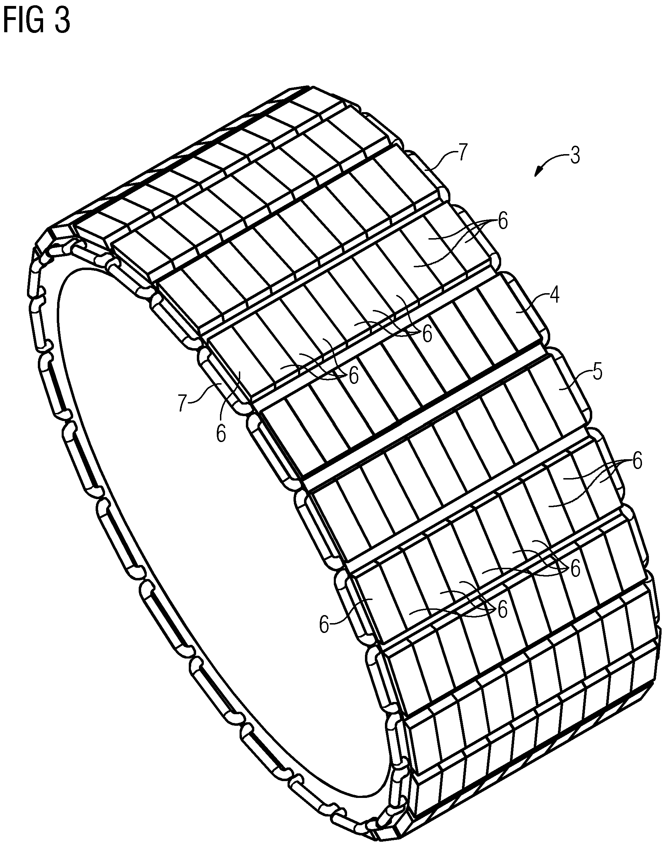

Die Darstellung nach FIG 3 zeigt eine zweite perspektivische Darstellung des Läufers 3. Die Pole 4 und 5 sind jeweils durch eine Vielzahl von einzelnen Permanentmagneten ausgebildet.

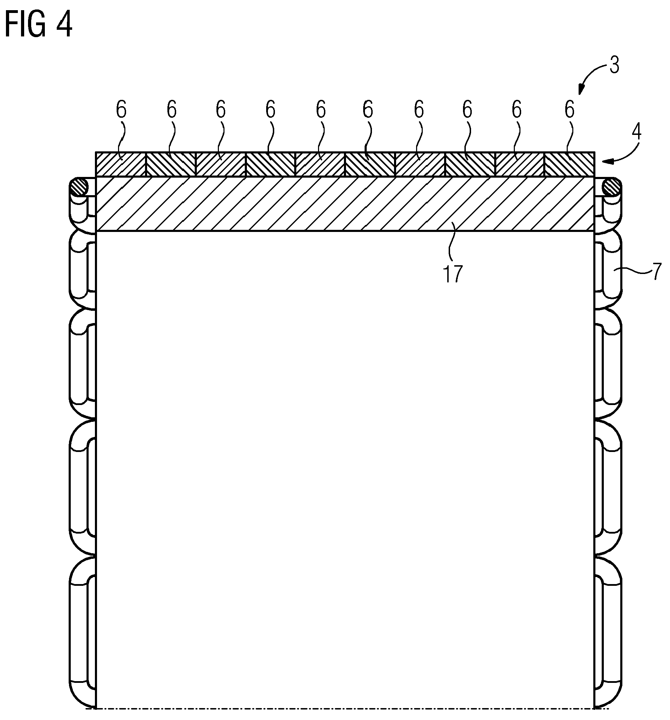

Die Darstellung nach FIG 4 zeigt einen Ausschnitt eines Schnitts durch den Läufer 3 in einer radialen Richtung. Der Pol 4 weist eine Vielzahl von Permanentmagneten 6 auf. Die Spulen 7 schließen sich außerhalb des Läuferblechpaketes 17, wobei die jeweilige Rückführungsschleife vom Läuferblechpaket 17 beabstandet ist.

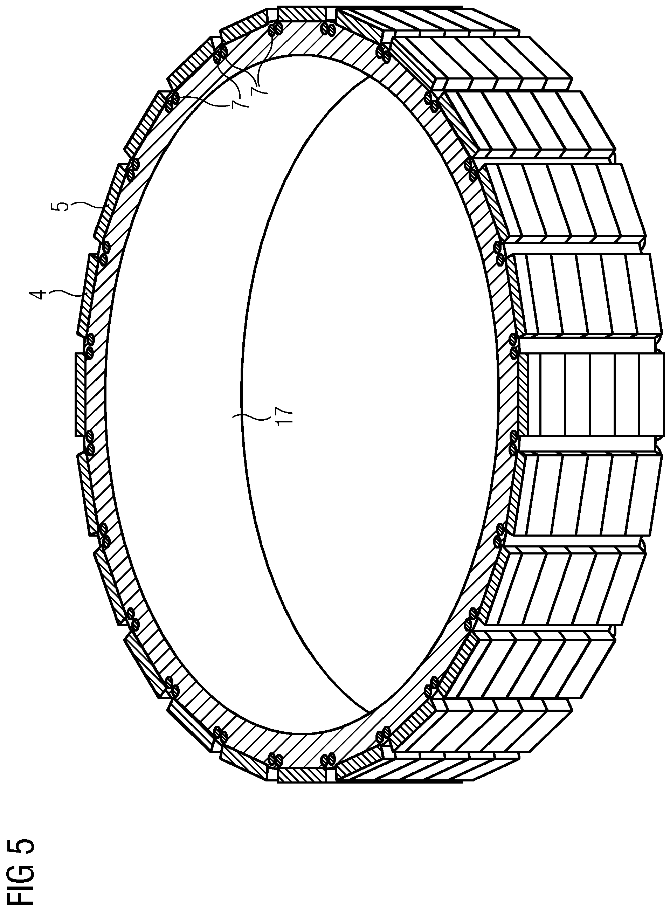

Die Darstellung nach FIG 5 zeigt einen Schnitt durch den Läufer 3 in einer perspektivischen Darstellung, wobei die Position der Spulen 7 innerhalb des Läuferblechpaketes 17 gezeigt ist.

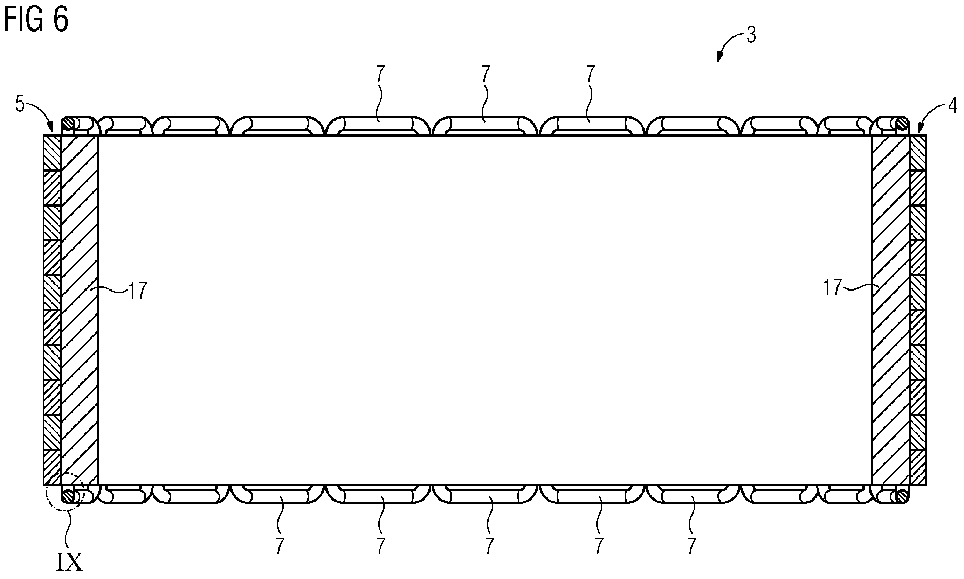

Die Darstellung nach FIG 6 zeigt einen weiteren Schnitt durch den Läufer 3, wobei sich auch hier die Spulen 7 außerhalb des Läuferblechpaketes 17 schließen, die jeweilige Rückführungsschleife vom Läuferblechpaket 17 aber nicht beabstandet ist.

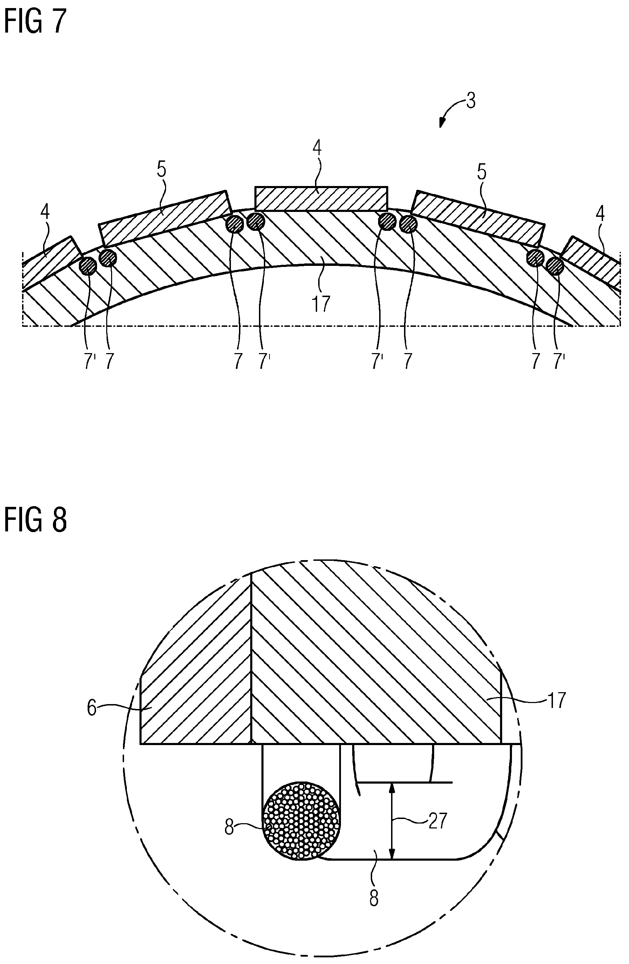

Die Darstellung nach FIG 7 zeigt einen Ausschnitt eines Schnitts durch den Läufer 3 in einer axialen Richtung. Die Pole 4, 5 überdecken die Spulen 7, 7' zumindest teilweise in einer radialen Richtung. Die Spulen 7 sind in dieser Figur den Polen 5 zugeordnet und die Spulen 7' den Polen 4.

Die Darstellung nach FIG 8 zeigt eine Litze 8 als Spule, welche aus dem Läuferblechpaket 17 austritt und sich über eine Lötverbindung 27 zu einem stirnseitigen Kurzschluss schließt.

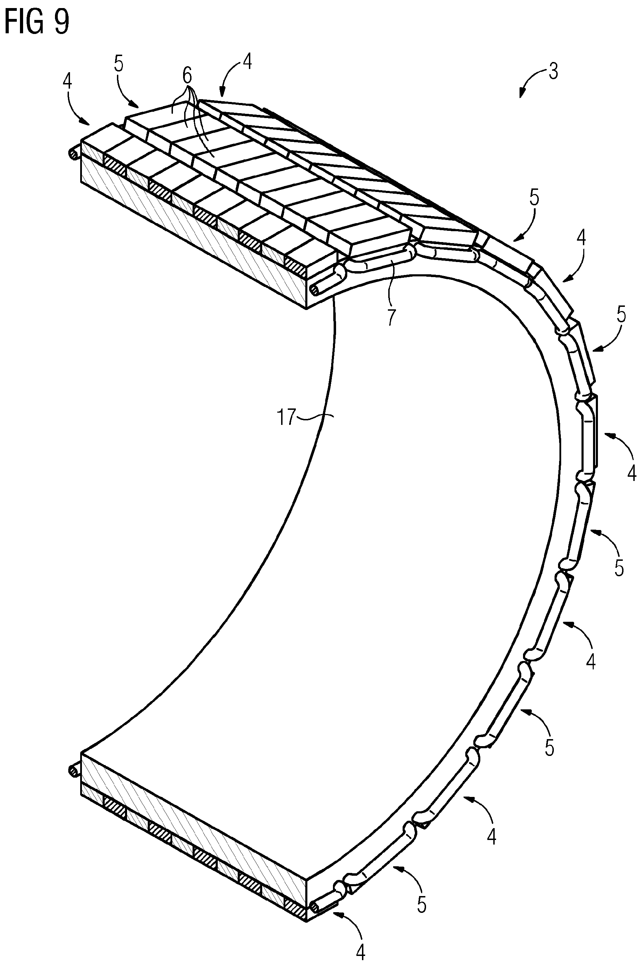

Die Darstellung nach FIG 9 zeigt einen weiteren Ausschnitt eines Schnitts durch den Läufer 3 in einer perspektivischen Darstellung um den Aufbau des Läufers 3 mit den Polen 4, 5 und den Permanentmagneten 6, die abhängig von den alternierenden Polen eine unterschiedliche Ausrichtung bezüglich des Magnetfeldes haben und den Spulen 7, welche sich hier im Läuferblechpaket 17 befinden.

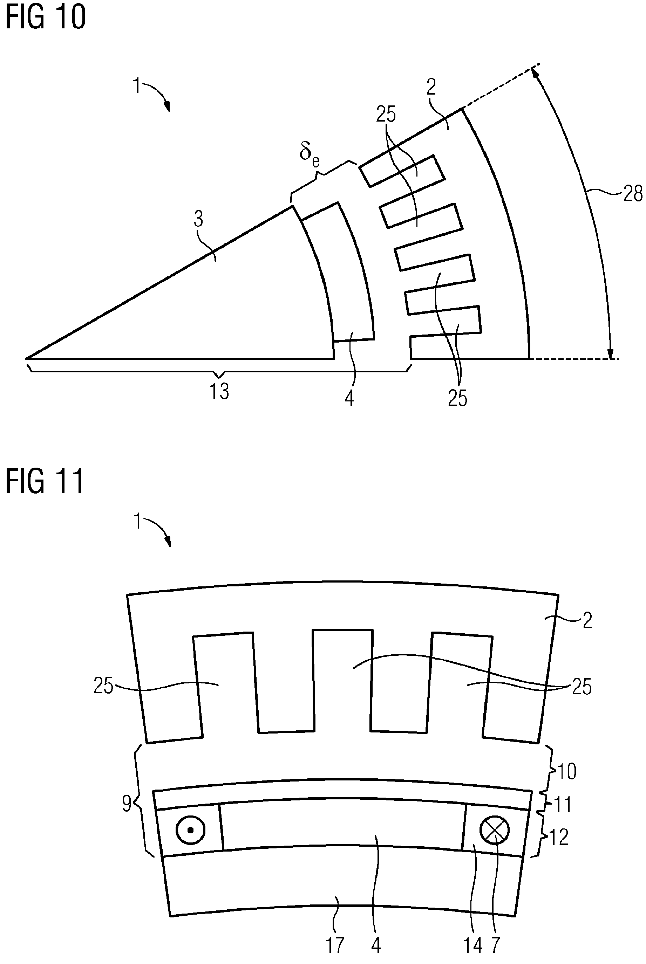

Die Darstellung nach FIG 10 zeigt einen Kreissegmentausschnitt 28 einer permanenterregten Synchronmaschine 1, welche einen Stator 2 mit Statornuten 25 für nicht dargestellte Statorwicklungen und einen Läufer 3 mit einem Pol 4 aufweist. Die permanenterregte Synchronmaschine weist eine Polpaarzahl p und damit 2*p Pole auf. Die permanenterregte Synchronmaschine 1 weist einen Statorinnendurchmesser Dᵢ 13 auf. Daraus ergibt sich ein Wert für die Polteilung mit (n*Dᵢ)/(2*p)=τₚ. In einer Ausgestaltung weist die permanenterregte Synchronmaschine 1 ein Verhältnis der äquivalenten Luftspaltweite δₑ zur Polteilung τₚ von größer 0,1 auf δe/τₚ > 1/10. Die äquivalente Luftspaltweite δₑ setzt sich aus der mechanischen Luftspaltweite δ_{mech,} der Magnethöhe h_{mag} und beispielsweise einer Höhe einer Läuferbandage d_{can} zusammen, wie dies in FIG 11 näher dargestellt ist.

Die Darstellung nach FIG 11 zeigt eine Spule 7 tangential neben einem Pol 4. Der Pol 4 bildet sich aus Permanentmagnete, welche auf dem Läuferblechpaket 17 angeordnet sind. Eine mögliche Stromrichtung durch die Spule 7 ist durch eine Pfeilspitze und ein Kreuz angezeigt. Die äquivalente Luftspaltweite δₑ 9 zum Stator 2 hin, setzt sich aus einer Summe aus der mechanischen Luftspaltweite _{δmech} 10 der Permanentmagnethöhe h_{mag} 12 und der Bandagenhöhe d_{can} 11 zusammen (δₑ = δ_{mech} + h_{mag} + d_{can}).

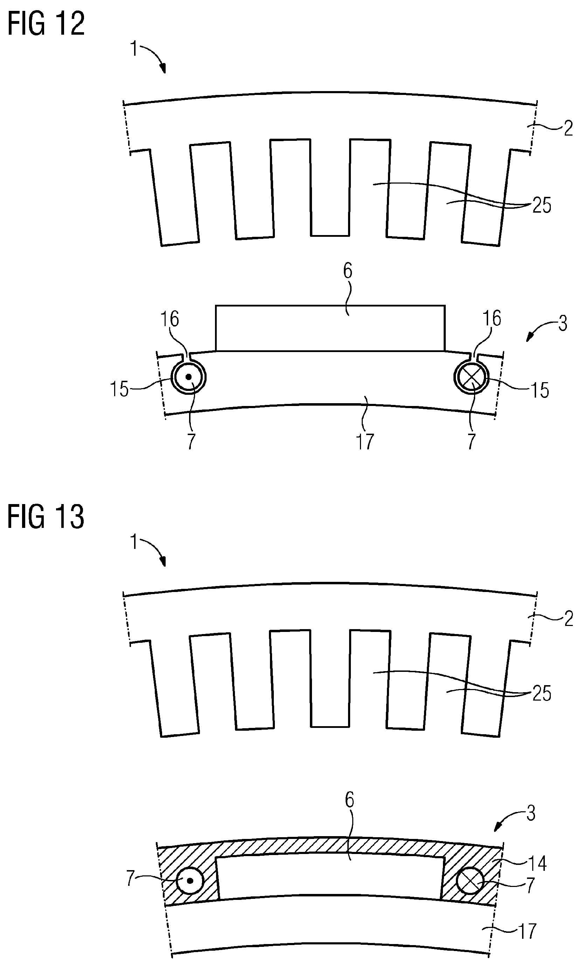

Die Darstellung nach FIG 12 zeigt im Ausschnitt neben dem Stator 2 auch eine Spule 7 in einem Kanal 15, welcher sich im Läuferblechpaket 17 des Läufers 3 befindet. Die Spule 7 überschneidet radial nicht den Bereich des Permanentmagneten 6. Der Kanal 15 weist einen Schlitz 16 (Streuschlitz) zur Reduzierung der magnetischen Streuung auf.

Die Darstellung nach FIG 13 zeigt im Ausschnitt eine permanenterregte Synchronmaschine 1 mit Stator 2 und Rotor 3, wobei der Permanentmagnet 6 des Rotors und die Spule 7 auf dem Läuferblechpaket 17 durch einen Verguss 14 positioniert sind. In dem Verguss 14 kann sich radial oberhalb von Magnet 6 und Spule 7 eine Bandage befinden. Die Spule 7 und der Magnet 6 sind also unter der Bandage zur mechanischen Fixierung vergossen.

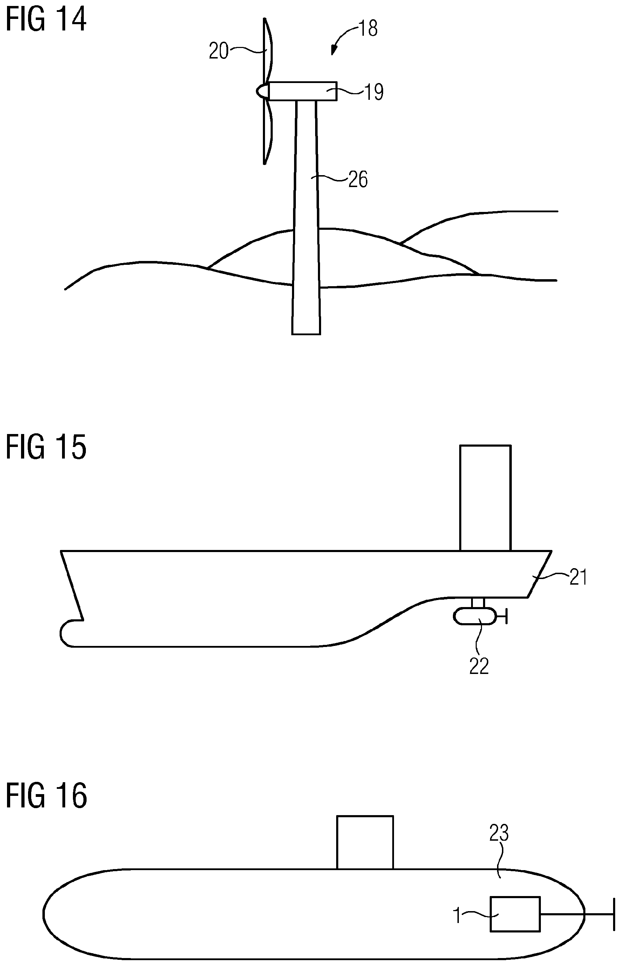

Die Darstellung nach FIG 14 zeigt eine Windkraftanlage 18 mit einer Gondel 19 auf einem Turm 26 und mit Flügeln 20. In der Windkraftanlage, also insbesondere in der Gondel 19 (z.B. in der Nabe) befindet sich eine permanenterregte Synchronmaschine der beschriebenen Art mit Spulen im Läufer.

Die Darstellung nach FIG 15 zeigt ein Schiff 21 als Beispiel für ein Wasserfahrzeug, wobei das Schiff einen Pot aufweist. In dem Pot befindet sich beispielsweise eine permanenterregte Synchronmaschine der beschriebenen Art mit Spulen im Läufer. Weist ein Schiff keinen Pot auf, so kann die permanenterregte Synchronmaschine der beschriebenen Art mit Spulen im Läufer als Antrieb des Schiffes auch im Schiffsrumpf sein.

Die Darstellung nach FIG 16 zeigt ein Unterseebot 23 als Beispiel für ein Wasserfahrzeug. Die permanenterregte Synchronmaschine 1 der beschriebenen Art mit Spulen im Läufer dient beispielsweise als Antrieb des U-Bootes 23.

## Patentansprüche

1. Permanenterregte Synchronmaschinen (1) mit einem Stator (2) und einem Läufer (3), wobei der Läufer (3) Permanentmagnete (4) aufweist, wobei der Läufer (3) Spulen (5) aufweist, **dadurch gekennzeichnet, dass** ein Verhältnis von äquivalenter Luftspaltweite (6) zur Polteilung einen Wert von 1/10 überschreitet.

2. Permanenterregte Synchronmaschinen (1) nach Anspruch 1, **dadurch gekennzeichnet, dass** die permanenterregte Synchronmaschine (1) eine Leistung von mehr als 1 MW aufweist.

3. Permanenterregte Synchronmaschinen (1) nach Anspruch 1 oder 2, **dadurch gekennzeichnet, dass** Spulen (5) Litzen aufweisen.

4. Permanenterregte Synchronmaschinen (1) nach einem der Ansprüche 1 bis 3, **dadurch gekennzeichnet, dass** die Spulen (5) zum Kurzschluss verlötet oder gecrimpt sind.

5. Permanenterregte Synchronmaschinen (1) nach einem der Ansprüche 1 bis 4, **dadurch gekennzeichnet, dass** die elektrische Grundfrequenz der permanenterregten Synchronmaschine größer gleich 50 Hz ist.

6. Permanenterregte Synchronmaschinen (1) nach einem der Ansprüche 1 bis 5, **dadurch gekennzeichnet, dass** die Spulen (5) vergossen sind.

7. Permanenterregte Synchronmaschinen (1) nach einem der Ansprüche 1 bis 6, **dadurch gekennzeichnet, dass** die Permanentmagnete (4) vergossen sind.

8. Permanenterregte Synchronmaschinen (1) nach einem der Ansprüche 1 bis 7, **dadurch gekennzeich**n e t , dass die Spulen (5) in Kanälen (7) in einem Läuferblechpaket (8) des Läufers (3) sind.

9. Permanenterregte Synchronmaschinen (1) nach Anspruch 8, **dadurch gekennzeichnet, dass** die Kanäle (7) geschlitzt sind.

10. Permanenterregte Synchronmaschinen (1) nach einem der Ansprüche 1 bis 7, **dadurch gekennzeichnet, dass** die Spulen (5) auf einem Läuferblechpaket (8) des Läufers (3) sind.

11. Permanenterregte Synchronmaschinen (1) nach einem der Ansprüche 1 bis 10, **dadurch gekennzeichnet, dass** die Permanentmagnete einen Dysprosium Anteil von kleiner 2% oder gleich 0% aufweisen.

12. Verwendung einer permanenterregten Synchronmaschine (1) in einer Gondel (19) einer Windkraftanlage (18) oder in einem Wasserfahrzeug (21), wobei die permanenterregte Synchronmaschine (1) einen Stator (2) und einen Läufer (3) aufweist, wobei der Läufer (3) Permanentmagnete (4) und Spulen (5) aufweist, wobei die Spulen (5) den magnetischen Fluss (9) der Permanentmagnete (4) umfassen.

13. Verwendung nach Anspruch 12, wobei bei einer Vielzahl von Spulen (5) eine Spule den magnetischen Hauptfluss eines Pols (4, 5) des Läufers umfasst.

14. Verwendung nach Anspruch 12 oder 13, wobei die permanenterregte Synchronmaschine (1) eine permanenterregte Synchronmaschine nach einem der Ansprüche 1 bis 10 ist.

15. Verwendung nach einem der Ansprüche 12 bis 14, wobei die Windkraftanlage (18) auf See ist.

16. Verwendung nach einem der Ansprüche 12 bis 14, wobei das Wasserfahrzeug (21) ein Unterseeboot (23) ist oder ein Marineschiff ist oder ein Containerschiff ist.
